# EUROPÄISCHE PATENTANMELDUNG

(11) **EP 0 762 114 A2**
(43) Veröffentlichungstag der Anmeldung: **12.03.1997**
(21) Anmeldenummer: 96114158.7
(22) Anmeldetag: 04.09.1996
(51) Int. Cl.: G01N 21/64, G01N 33/533, G02B 21/00

(54) **Vorrichtung für parallele Zweiphotonen-Fluoreszenz-Korrelations-Spektroskopiemessungen (TPA-FCS) an mehreren Proben und deren Verwendung zum Wirkstoff-Screening**

(30) Priorität: 07.09.1995 DE 19533092
(71) Anmelder: BASF AKTIENGESELLSCHAFT, 67056 Ludwigshafen (DE)
(72) Erfinder: Schrof, Wolfgang, Dr., 67271 Neuleiningen (DE); Klinger, Jürgen, Dr., 67112 Mutterstadt (DE); Horn, Dieter, Dr., 69120 Heidelberg (DE); Mayer, Elmar, Dr., 86156 Augsburg (DE)
(74) Vertreter: Isenbruck, Günter, Dr.

(57) **Zusammenfassung**

In einer Vorrichtung für die Durchführung von laser-induzierter Zweiphotonen-Fluoreszenz-Korrelations-Spektroskopie (TPA-FCS), sind mehrere Volumina (6) derart in der Vorrichtung umgrenzt bzw. definiert, daß in diesen Volumina eingebrachte Proben (3) mittels eines einzigen Lasers (1) anregbar und parallel beobachtbar sind. Eine solche Vorrichtung findet z.B. Verwendung zum Wirkstoff-Screening.

## Beschreibung

Die vorliegenden Erfindung betrifft eine Vorrichtung für die Durchführung von laser-induzierter Zweiphotonen-Fluoreszenz-Korrelations-Spektroskopie (TPA-FCS) sowie die Verwendung einer solchen Vorrichtung zum Wirkstoff-Screening.

Bei der Untersuchung Kleinster und molekularer Strukturen werden je nach Anwendungsgebiet und Aufbau bzw. Art der zu analysierenden bzw. zu beobachtenden Proben verschiedene Spektroskopieverfahren und entsprechende Meßvorrichtungen eingesetzt.

Die FCS beruht auf der Beobachtung der Fluoreszenz aus einem sehr Kleinen Ausschnitt aus einem Probenvolumen, dem Beobachtungsvolumen. Im Mittel befindet sich in diesem Ausschnitt nur eine Kleine Anzahl von fluoreszierenden Partikeln. Um diesen Mittelwert herum schwankt die Anzahl der Partikel im beobachteten Volumen statistisch durch thermische Diffusion in einer ruhenden Flüssigkeit oder durch kollektive Bewegung in einer strömenden Flüssigkeit. Die schwankende Anzahl von fluoreszierenden Partikeln im Beobachtungsvolumen führt zu zeitlichen Schwankungen der Fluoreszenz.

In D. Magde, E.L. Elson, W.W. Webb, Phys. Rev. Lett. 29 (1972), 705-708, R. Riegler, P. Grasselli, M. Ehrenberg, Phys. Scr. 19 (1979), 486-490, und N.L. Thompson, "Topics in Fluorescence Spectroscopy, Vol. 1" (J.R. Laskowicz, Ed.), Plenum Press, New York, 1991, 337-410, sind bisherige Meßanordnungen mittels der Fluoreszenz-Kortelations-Spektroskopie beschrieben, bei denen ein speziell definiertes Beobachtungsvolumen durch eine Anordnung erzielt wird, die konfokale Mikroskopie genannt wird. Die konfokale Mikroskopie wird in den Dokumenten T. Wilson, C. Sheppard, "Theory and Practice of Scanning Optical Microscopy", Academic Press, New York, 1984, und T. Wilson (Ed.), "Confocal Microscopy", Academic Press, London (1984), beschrieben. Dabei handelt es sich um eine Standard-Mikroskopanordnung, bei der in Beleuchtungs- und Beobachtungsstrahlengang jeweils in einer Zwischenbildebene Pinhole-Blenden angebracht sind, so daß das Bild der Beleuchtungsblende in dem untersuchten Objekt genau auf die Öffnung der Beobachtungsblende fallt. Dadurch kann das beobachtete Volumen auf einen sehr engen Bereich in der Objektebene beschränkt werden, aber der instrumentelle Aufwand ist unbefriedigend hoch. Zu diesem hohen apparativen Aufwand kommt noch die aufwendige Justierung und die hohe Anfälligkeit bezüglich Schmutz und Erschütterung hinzu, so daß insbesondere Messungen vor Ort nicht durchgeführt werden können.

In K.M. Berland, P.T.C. So, E. Graton, "Two-Photon Fluorescence Correlation Spectroscopy: Method and Application to the Intracellular Environment", Biophy. J. 68 (1995), 694-701, wird die TPA-FCS in intrazellularer Umgebung eingesetzt. Auch hier wird mit einem aufwendigen Mikroskop, allerdings ohne Pinhole-Blende im optischen Strahlengang, gearbeitet. Der Nachteil dieser Vorrichtung ist der, daß aufgrund des aufwendigen Mikroskopes ebenfalls keine Messungen vor Ort durchgeführt werden können und darüberhinaus nur eine Probe gleichzeitig untersucht werden kann. Die Messung ist mit hohem Zeit- und Meßaufwand verbunden, da gerade das Auswechseln der Probe und die daraufhin erforderliche Justierung des Mikroskops sehr lange dauert. Eine Untersuchung in größerem Maßstab kann mit einem solchen Labor-Meßaufbau nicht durchgeführt werden.

Es ist daher eine Aufgabe der vorliegenden Erfindung, eine Vorrichtung für die TPA-FCS vorzusehen, mit der die Untersuchung von Proben effektiver, schneller und kostengünstiger erfolgen kann.

Eine weitere Aufgabe der vorliegenden Erfindung ist es eine Vorrichtung für die TPA-FCS und ein Verfahren vorzusehen, die für Wirkstoff-Screening eingesetzt werden kann.

Diese Aufgabe der vorliegenden Erfindung wird durch eine Vorrichtung für die Durchführung von laser-induzierter Zweiphotonen-Fluoreszenz-Korrelations-Spektroskopie (TPA-FCS) gelöst, die dadurch gekennzeichnet ist, daß mehrere Volumina derart in der Vorrichtung umgrenzt bzw. definiert sind, daß in diesen Volumina eingebrachte Proben mittels eines einzigen Lasers anregbar und parallel beobachtbar sind.

Durch den parallelisierten Aufbau der Meßvorrichtung wird erreicht, daß mehrere Proben zeitgleich und nebeneinander beobachtet werden können. Die notwendige Laserstrahlung wird so eingesetzt, daß mehrere Probenvolumina umgrenzt werden und die so definierten Volumina unabhängig voneinander untersucht werden können. Es ist so beispielsweise auch möglich eine Probe gegen eine andere auszutauschen, ohne die Beobachtung der anderen Proben unterbrechen zu müssen. Auf diese Weise können Proben industriell untersucht werden, ohne daß die Vorrichtung jedesmal neu eingerichtet werden müßte. Die gesamte Untersuchung wird mit einem einzigen Laser durchgeführt und ermöglicht so die effizientere, schnellere und kostengünstigere Untersuchung von Proben.

In einem besonders bevorzugten Ausführungsbeispiel der vorliegenden Erfindung ist eine Vorrichtung vorgesehen, in der der Laserstrahl des Lasers derart modifiziert ist, daß er mehrere Fokusbereiche, insbesondere Fokusbereiche von weniger als 3 µm, bevorzugt von weniger als 1 µm radialer Ausdehnung, aufweist, die die Volumina definieren und in denen Proben beobachtbar sind. Ein Laserstrahl kann auf verschiedene Weise modifiziert werden: Er kann durch einen Strahlenteiler geteilt und in den verschiedenen Strahlengängen fokussiert werden. Der Laserstrahl kann aber auch beispielsweise in einem ersten Fokussierbereich fokussiert werden, durch ein zweites Element wieder geradegerichtet bzw. auf einen zweiten Fokussierbereich fokussiert werden, etc. So kann leicht in einem Strahlengang eine "Kette" von hintereinandergeschalteten Fokussier-bereichen erzeugt werden, in deren einzelnen Fokussierbereichen bzw. Meßzellen die entsprechenden Proben beobachtet werden können. Diese beiden Anordnungen können auch miteinander kombiniert werden, so daß verschiedene parallele Strahlengänge ihrerseits in Reihe hintereinander in verschiedene Fokussierbereiche unterteilt werden können. Die radiale Ausdehnung des im Regelfall Gaußschen Strahlengangs des Lasers kann dabei so gewählt werden, daß auf kürzester Ausdehnung in z-Richtung eine Abmessung von weniger als 2, vorzugsweise von weniger als 1 µm erreicht wird. Damit wird das Volumen, in dem die Intensität des Laserstrahles so hoch ist, daß TPA-FCS betrieben werden kann, klar definiert. Aufgrund der quadratischen Abhängigkeit der Fluoreszenz von der Anregungsintensität durch den Laser kann das zu beobachtende Probenvolumen auf wenige µm³, insbesondere auf weniger als 1 µm³, beschränkt werden. Dies ist aber gerade beim Wirkstoff-Screening von Vorteil, da eine Schädigung der Bestandteile in der übrigen Probe vermieden wird, in der die Laserintensität aufgrund der extremen Fokussierung des Gaußschen Strahls viel zu gering ist, um diese zu schädigen. Aus diesem Grund kann das Verfahren auch in Zellorganismen eingesetzt werden. Ein weitere Vorteil ist darin zu sehen, daß aufgrund des Kleinen Beobachtungsvolumens statistische Schwankungen um den Mittelwert in Bezug zum Mittelwert groß genug sind, um ausgewertet zu werden.

In einem weiteren vorteilhaften Ausführungsbeispiel der Vorrichtung der vorliegenden Erfindung sind erste Objektive oder Faseroptiken, insbesondere optische Objektive, derart vorgesehen, daß der Laserstrahl mehrmals fokussiert ist. Die Fokussierung des Laserstrahls kann grundsätzlich auf verschiedene Weisen erfolgen, sei es durch thermische oder optische Linsen, sei es durch die Ausnutzung bestimmter Eigenschaften von Lichtwellenleitern, etc. Die Verwendung von optischen Objektiven hat den Vorteil, daß diese leicht zu beschaffen und preiswert sind, so daß der Laserstrahl bevorzugt mittels optischer Objektive, d.h. beispielsweise Linsen oder Mikroskoplinsen, fokussiert wird. Umso weniger Verluste der Laserstrahl beim Durchtritt durch eine solche Linse erleidet, um so mehr Proben können in Reihe geschaltet parallel beobachtet werden. Der Verlust beim Durchtritt durch die Probe ist verschwindend gering. Die Fokussierung in der Meßlösung kann auch durch Eintauchen einer Monomode-Lichtfaser erreicht werden.

Bei einer weiteren vorteilhaften Ausfühungsform der erfindungsgemäßen Vorrichtung ist als Laserquelle ein Ti:Saphir Laser, insbesondere ein gepulster modengekoppelter Laser, bevorzugt mit Pulsen von 80 bis 100 fs FWHM (füll width @ half minimum) vorgesehen. Dieser Laser kann mit einer Repetitionsrate von 76 MHz betrieben werden. Durch die Wahl des Ti:Saphir Lasers wird ein bewährter Laser eingesetzt, der handelsüblich erhältlich ist und in verschiedenen Wellenlängenbereichen eingesetzt werden kann. Diese Flexibilität innerhalb des Abstimmbereichs ist insbesondere dann von Vorteil, wenn aufgrund der Probenbeschaffenheit bzw. der unterschiedlichen Markierung der Referenzstoffe unterschiedliche Anregungsbereiche erforderlich sind. Durch die kurzen Pulse werden Spitzenieistungen erreicht, die auch bei einem geringen durchschnittlichen Leistungsniveau die für die TPA-FCS notwendige Leistung in dem Beobachtungsvolumen bewirken. Die Repetitionsrate von 76 Mhz ermöglicht eine gute Erfassung der Korrelation. Der Laser kann beispielsweise mit einer mittleren Leistung von 1 W betrieben werden. Eine hohe Anregungsintensität - eine Voraussetzung für eine effektive Zweiphotonenanregung - wird durch Verwendung von Lichtpulsen mit hohen Spitzenleistungen erreicht.

Bei einer weiteren vorteilhaften Ausführungsform der erfindungsgemäßen Vorrichtung sind mindestens 4 Proben, vorzugsweise mindestens 10 Proben, insbesondere bis zu 100 Proben, parallel beobachtbar. Die Anzahl der beobachtbaren Proben hängt von der erreichten Strahlgeometrie, von den Verlusten der verwendeten optischen Elemente, von der Leistung, mit der der Laser betrieben wird, von der Durchlässigkeit der Proben, der Kapazität der Auswerteeinheit, etc. ab. Bei geeigneter Wahl der entsprechenden Parameter können auch bis zu 1000 Proben parallel beobachtet werden.

Ein weiteres vorteilhaftes Ausführungsbeispiel der vorliegenden Vorrichtung zeichnet sich dadurch aus, daß je Probe ein Photodetektor vorgesehen ist und alle Signale der Photodetektoren zu einem Rechner weitergeleitet werden. So kann pro Meßvolumen durch den Einsatz eines Photodetektors die Fluoreszenzstrahlung aus jedem Probenvolumen gleichzeitig bzw. parallel erfaßt werden, und diese resultierenden Signale an einen Rechner weitergegeben werden, in dem sie dann beispielsweise im Multiplexverfahren ausgewertet werden können. Auf diese Weise ist eine effiziente Methode bereitgestellt, mehrere Proben parallel zu untersuchen und eine Vielzahl von Signalen parallel zu erfassen und auszuwerten.

In einem speziellen vorteilhaften Ausführungsbeispiel der vorliegenden Vorrichtung ist mindestens ein mit einer Auswerteelektronik verbindbarer Photodetektor - Photomultiplier oder Halbleiterdetektor - vorgesehen, auf den der Fluoreszenzstrahl einer jeden Probe vorzugsweise in einem Winkel von 90° abgebildet ist. Durch diese Anordnung kann die Fluoreszenz von der Probe mittels einer Autokorrelationsanalyse in der nachfolgenden Auswerteeinheit ausgewertet werden. Aus dem Verlauf der gemessenen normierten Autokorrelationsfunktion können die mittleren Verweildauern der Partikel im Beobachtungsvolumen ermittelt werden. Eine einfache Unterscheidung zwischen komplexierten und freien Partikeln kann durch Bestimmung des 50%-Wertes der normierten Autokorrelationsfunktion erfolgen, der sich bei der Komplexierung zu längeren Zeiten verschiebt. Auf diese Weise kann einfach zwischen gebundenem und freiem Referenzstoff getrennt und so Wirkstoff-Screening betrieben werden.

Die Abbildung des Fluoreszenzstrahls erfolgt vorzugsweise über ein zweites Objektiv bzw. über eine insbesondere optische Linse und/oder ein Filter. Dadurch können die Intensität und die Wellenlänge des ankommenden Strahls richtig eingestellt und begrenzt werden. Die Detektion der Partikelfluoreszenz erfolgt demnach über eine einfache optische Abbildung mittels Linse bzw. über eine Lichtleitfaser, wobei das zurücklaufende Fluoreszenzlicht über einen Phasenkoppler auf die Photokathode eines Photomultipliers oder auf einen Halbleiterdetektor ausgekoppelt wird. Das TPA-Anregungslicht wird vor dem Detektor mit einem Interferenz- oder Kurzpaßfilter vom Fluoreszenzlicht getrennt. Die Auswerteelektronik kann vorzugsweise einen Verstärker für das Signal vom Photomultiplier und/oder einen Korrelator und/oder einen Rechner umfassen. Hierdurch lassen sich die Informationen nochmals deutlicher herausfiltern, verstärken und auswerten. Weitere Komponenten wie Computerkarten, digitale Filter, etc. können nach Belieben eingesetzt werden. Eine solche Ausführungsform der vorliegenden Erfindung zeichnet sich dadurch aus, daß sie ohne aufwendige mikroskopische Apparaturen auskommt.

Die Volumenkonzentration der fluoreszierenden Partikel kann mit der vorliegenden Erfindung ebenfalls gemessen werden.

Die Gesamtfluoreszenzintensität, die auf den Detektor trifft, steigt linear mit der Konzentration der fluoreszierenden Partikel und quadratisch mit der Spitzenleistung der Anregungslichtquelle. Eicht man die Sonde mit einer bekannten Konzentration von Partikeln bei konstanter Anregungsintensität, so können unbekannte Konzentrationen aus ihrem Gesamtfluoreszenzsignal bestimmt werden.

Bei einer weiteren vorteilhaften Ausführungsform der Vorrichtung der vorliegenden Erfindung sind die Proben in einer Linie angeordnet, und der Laserstrahl tritt geradlinig durch die Proben hindurch. Durch diese Anordnung kann der Laserstrahl mit seiner gesamten Energie hindurchgeführt werden, so daß mit einer moderaten Pumpleistung des Lesers selbst nach Abzug der vernachlässigbaren Verluste beim Durchtritt durch die Optik und die einzelnen Proben eine genügend hohe Intensität der Laserstrahlung erreicht werden kann. Mit dieser Anordnung führt die geradlinige Hintereinanderschaltung von Meßzellen zu einem einfachen und wenig störanfälligen Aufbau.

Bei einer weiteren bevorzugten Ausführungsform der vorliegenden Erfindung wird eine Vorrichtung bereitgestellt, bei der eingerichtete und fokussierte Objektive für den Laserstrahl und/oder den Fluoreszenzstrahl arretiert sind. Durch diese Arretierung der Optik auf die definierten Probenvolumina kann nun eine industrielle Verwendung der Vorrichtung erfolgen: Die einmal arretierte Vorrichtung muß nach dem Auswechseln der einzelnen Proben nicht mehr neu justiert und eingerichtet werden. Die Fluoreszenzstrahlung wird über die Photomultiplier erfaßt und ausgewertet. Daraufhin kann die Probe ausgetauscht werden und direkt eine weitere Untersuchung der neuen Probe erfolgen. Da mehrere Meßzellen zur Verfügung stehen können so gleichzeitig n neue Proben in die Vorrichtung eingebracht werden, so daß die industrielle Auswertung von Proben ermöglicht wird. Durch automatisiertes Probenhandling kann so ein hoher Durchsatz an Proben erreicht werden, ohne daß die Vorrichtung eines hohen Wartungs- und Justieraufwands bedürfte.

Bevorzugt wird die vorliegende erfindungsgemäße Vorrichtung zum Wirkstoff-Screening verwendet. Auf diese Weise ist es möglich, die Vorzüge dieser erfindungsgemäßen Vorrichtung bei der Untersuchung von Wirkstoffen einzusetzen und so beispielsweise mehrere zu untersuchende Wirkstoffe zu beobachten, die beim negativen Ausgang des Tests direkt auf einmal ausgeschlossen werden. Durch den parallelen Einsatz mehrerer Meßzellen und einem automatisierten Probenhändling können so innerhalb kürzester Zeit große Mengen an Wirkstoffen getestet werden, ohne daß die Vorrichtung jedesmal neu eingerichtet werden müßte. In ruhenden Flüssigkeiten können der translatorische Diffusionskoeffizient der fluoreszierenden Partikel und ihre Anahlkonzentration gemessen werden.

Insbesondere Veränderungen des Diffusionskoeffizienten, wie sie beispielsweise bei Anlagerung eines anderen Partikels an die fluoreszierenden Partikel auftreten, lassen sich so messen. Es können also Komplexierungsreaktionen physikalischer und biochemischer Natur gemessen werden, sofern nur einer der beteiligten Reaktionspartner eigenfluoresziert oder mit einem Fluoreszenzfarbstoff markiert ist. Bei Verwendung mehrerer fluoreszierender Partikelsorten gleichzeitig kann, wenn die Emissionsspektren der einzelnen Farbstoffe geeignet gewählt wurden, durch Wahl der Beobachtungswellenlänge über entsprechende Detektionsfilter zwischen den Partikelsorten unterschieden werden.

Die Methode ist auch für eine Anwendung mit einem starken Hintergrund von anderen, nichtfluoreszierenden Partikeln geeignet, da die Detektion nur auf fluoreszierende Partikel anspricht. Diese Eigenschaften lassen eine solche Einrichtung als geeignet zum Nachweis biochemischer Erkennungsreaktionen sowohl direkt als auch in einem Verdrängungsversuch erscheinen.

Der einfache optische Aufbau der Methode ist auch geeignet für den Parallelbetrieb vieler Meßkanäle, was den Zeitbedarf bei Reihenuntersuchungen erheblich verkürzt.

Eine weitere Verwendung einer Vorrichtung gemäß dieser Erfindung besteht in der Untersuchung, insbesondere in einem Verdrängungsverfahren, von Ligand/Rezeptor-Bindungen, bevorzugt zur Untersuchung von Bindungen von Mediatoren biologischer Antworten (biological response mediators), insbesondere Wachstumsfaktoren/ Wachstumsfaktoren-Rezeptor, DNA-bindendes Protein/spezifische DNA-Sequenz und/oder Antikörper/Antigen. Dieses Verdrängungsexperiment bzw. -verfahren kann wie folgt ausgeführt werden: Beim Wirkstoff-Screening nach dem Verdrängungsverfahren bindet ein bekannter fluoreszenzmarkierter Referenzwirkstoff an einen Rezeptor. Befinden sich in der zu untersuchenden Flüssigkeit effektivere Liganden (d.h. bessere Wirkstoffe), so werden sie den vorgelegten fluoreszenzmarkierten Referenzwirkstoff verdrängen. Wird über die TPA-FCS das Diffüsionsverhalten des fluoreszenzmarkierten Referenzwirkstoffes gemessen, so ergibt sich eine Zunahme der Diffüsionsbewegung des nun freien (d.h. Kleinere Masse und Kleineres Volumen), verdrängten Referenzwirkstoffes. Der einfache Meßaufbau, die kurze Meßzeit und die einfach erreichbare Parallelisierung erlauben ein effektives Wirkstoff-Screening mit hohem Probendurchsatz.

Im folgenden wird anhand der Zeichnung ein Ausführungsbeispiel der vorliegenden Erfindung mit weiteren vorteilhaften Ausgestaltungen dargestellt.

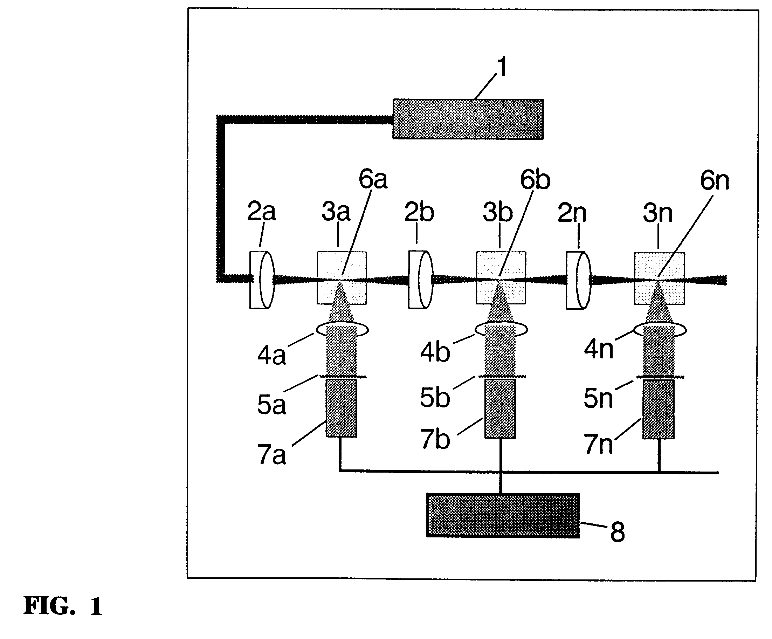

Fig. 1 zeigt den schematischen Aufbau eines Ausführungsbeispiels der vorliegenden Erfindung mit n Meßzellen:

In der Anordnung ist ein gepulster Laser 1 eingesetzt, um über Mikroskopobjektive 2a, 2b, 2n durch mehrere Meßzellen 3a, 3b, 3n geleitet und innerhalb dieser fokussiert zu werden. In den Fokussierbereichen 6a, 6b, 6n der Meßzellen 3 befinden sich jeweils eine Probe. Die Detektion der Partikelfluoreszenz innerhalb der Proben erfolgt durch eine optische Abbildung über Linsen 4a, 4b, 4n auf Photomultiplier 7a, 7b, 7n. Vor den Photomultipliern 7 sind Filter 5a, 5b, 5n angebracht. Diese Detektionsfilter 5 können bei Einsatz mehrerer fluoreszierender Partikelsorten und bei geeigneter Wahl der Emissionsspektren der einzelnen Farbstoffe verwendet werden, um durch die Wahl der Beobachtungswellenlänge zwischen den Partikelsorten zu unterscheiden. Die Information der Photomultiplier 7 wird der Auswerteelektronik 8 zugeführt und dort verarbeitet.

Die vorliegende Erfindung mißt die Fluoreszenzkorrelation aus einem sehr Kleinen Probenvolumen nach dem Prinzip der FCS auf einfache Art und Weise, ohne dazu eine aufwendige konfokale Optik benutzen zu müssen. Speziell ist die Eignung zum Wirkstoff-Screening nach der Methode der Verdrängung eines fluoreszenzmarkierten Referenzwirkstoffs mit einfachen Mitteln zu parallelisieren und so preisgünstig und schnell durchzuführen. Durch das Verdrängen des gebundenen, fluoreszenzmarkierten Referenzwirkstoffs verringert sich der Translationsdiffüsionskoeffizient deutlich. Dieser Effekt kann zum Erkennen neuer Wirkstoffe herangezogen werden.

Die Gefahr einer Schädigung der Probe wird gegenüber der bisher üblichen Einphotonenabsorption deutlich gemindert, da bei der Zweiphotonenabsorption die Anregung nur im Laserfokus erfolgt, dem eigentlichen Meßvolumen, ansonsten geht der Laserstrahl wegen der langen Wellenlänge ohne Wechselwirkung durch die Probe.

Mit Hilfe der Zweiphotonen-Fluoreszenz-Korrelations-Spektroskopie kann auf einfache Weise das Meßverfahren zur Ermittlung des Diffusionsverhaltens fluoreszenzmarkierter Partikel parallelisiert und somit effektiv und kostengünstig Wirkstoff-Screening betrieben werden. Das Licht einer einzelnen gepulsten Laserlichtquelle kann durch mehrere Meßzellen geleitet und dabei jeweils in den Meßzellen fokussiert werden, die bedingt durch ihren einfachen Aufbau (Standard-Mikroskopobjektiv bzw. Monomode-Lichtleiter in der Anregung und einfachste Optik im Nachweis) sehr kostengünstig sind. Gegenüber konventionellen Fluoreszenzkorrelationsspektrometern, die auf dem Einsatz eines konfokalen Mikroskops mit den oben beschriebenen Nachteilen beruhen, werden der optische Aufbau vereinfacht, die Justage erleichtert und die Kosten und der Zeitaufwand für eine Parallelisierung drastisch gesenkt.

Die Anwendung von Verfahren und Aufbau ermöglicht Wirkstoff-Screening generell und speziell in der parallelisierten Version kostengünstig und zeiteffektiv.

Es kann komplett auf die aufwendige, empfindliche und teure konfokale Optik verzichtet werden. Die Messung kann auch in Probenbehältern erfolgen, die für Mikroskopie nicht geeignet sind. Die parallelisierte Messung ist in einfacher und kostengünstiger Weise möglich.

Die Gefahr einer Schädigung der Probe wird gegenüber der bisher üblichen Einphotonenabsorption deutlich gemindert, da bei der Zweiphotonenabsoiption die elektronische Anregung nur im Laserfokus erfolgt, dem eigentlichen Meßvolumen, ansonsten geht der Laserstrahl wegen der langen Wellenlänge, die außerhalb des linearen Absorptionsspektrums liegt, ohne Wechselwirkung durch die Probe.

## Patentansprüche

1. Vorrichtung für die Durchführung von laser-induzierter Zweiphotonen-Fluoreszenz-Korrelations-Spektroskopie (TPA-FCS), dadurch gekennzeichnet, daß mehrere Volumina (6) derart in der Vorrichtung umgrenzt bzw. definiert sind, daß in diesen Volumina eingebrachte Proben (3) mittels eines einzigen Lasers (1) anregbar und parallel beobachtbar sind.

2. Vorrichtung nach Anspruch 1, dadurch gekennzeichnet, daß der Laserstrahl des Lasers (1) derart modifiziert ist, daß er mehrere Fokusbereiche, insbesondere solche von weniger als 3 µm, bevorzugt von weniger als 1 µm radialer Ausdehnung, aufweist, die die Volumina (6) definieren und in denen Proben (3) beobachtbar sind, wobei bevorzugt als Laser ein Ti:Saphir Laser, insbesondere ein gepulster modengekoppelter Laser, insbesondere ein solcher mit Pulsen von 80 bis 100 fs FWHM, vorgesehen ist.

3. Vorrichtung nach Anspruch 1 oder 2, dadurch gekennzeichnet, daß erste Objektive oder Faseroptiken (2), insbesondere optische Objektive, derart vorgesehen sind, daß der Laserstrahl mehrmals fokussiert ist.

4. Vorrichtung nach einem der Ansprüche 1 bis 3, dadurch gekennzeichnet, daß mindestens 4 Proben (3), vorzugsweise mindestens 10 Proben, insbesondere bis zu 100 Proben, parallel beobachtbar sind, wobei bevorzugt je Probe ein Photodetektor (7) vorgesehen ist und alle Signale der Photodetektoren (7) zu einem Rechner weitergeleitet werden.

5. Vorrichtung nach einem der Ansprüche 1 bis 4, dadurch gekennzeichnet, daß mindestens ein mit einer Auswerteelektronik (8) verbindbarer Photodetektor - Photomultiplier oder Halbleiterdetektor - (7) vorgesehen ist, auf den der Fluoreszenzstrahl einer jeden Probe (3) vorzugsweise in einem Winkel von 90° abgebildet ist, wobei bevorzugt die Abbildung des Fluoreszenzstrahls über ein zweites Objektiv, insbesondere über eine optische Linse (4) und/oder ein Filter (5) erfolgt.

6. Vorrichtung nach einem der Ansprüche 1 bis 5, dadurch gekennzeichnet, daß die Proben (3) in einer Linie angeordnet sind und der Laserstrahl geradlinig durch die Proben hindurchtritt.

7. Vorrichtung nach einem der Ansprüche 1 bis 6, dadurch gekennzeichnet, daß eingerichtete und fokussierte Objektive für den Laserstrahl und/oder den Fluoreszenzstrahl arretiert in der Vorrichtung angeordnet sind.

8. Vorrichtung nach einem der Ansprüche 1 bis 7, gekennzeichnet durch eine Auswerteelektronik (8), die vorzugsweise für das Signal vom Photodetektor einen Verstärker für das Signal vom Photodetektor und/oder einen Korrelator und/oder einen Rechner umfaßt.

9. Verwendung einer Vorrichtung nach einem der Ansprüche 1 bis 8 zum Wirkstoff-Screening.

10. Verwendung einer Vorrichtung nach einem der Ansprüche 1 bis 8 zur Untersuchung, insbesondere in einem Verdrängungsverfahren, von Ligand/Rezeptor-Bindungen bevorzugt zur Untersuchung von Bindungen von Mediatoren biologischer Antworten, insbesondere Wachstumsfaktoren/Wachstumsfaktoren-Rezeptor, DNA-bindendes Protein/spezifische DNA-Sequenz und/oder Antikörper/Antigen.
